# EUROPÄISCHE PATENTANMELDUNG

(11) **EP 1 728 973 A1**
(43) Veröffentlichungstag der Anmeldung: **06.12.2006**
(21) Anmeldenummer: 05011830.6
(22) Anmeldetag: 01.06.2005
(51) Int. Cl.: F01D 11/00, F01D 11/04, F01D 9/06, F02C 7/143

(54) **Verfahren zum Sperren eines Spaltes einer Strömungsmaschine und Strömungsmaschine zum Durchführen eines solchen Verfahrens**

(71) Anmelder: SIEMENS AKTIENGESELLSCHAFT, 80333 München (DE)
(72) Erfinder: Buchal, Tobias, Dr., 40489 Düsseldorf (DE); Hülsemann, Gerhard, 46145 Oberhausen (DE); Milazar, Mirko, 46049 Oberhausen (DE); Minninger, Dieter, 46535 Dinslaken (DE); Neubauer, Michael, 13591 Berlin (DE); Nimptsch, Harald, 45136 Essen (DE); Pütz, Heinrich, 53804 Much (DE); Qian, Kang, Dr., 45479 Mülheim an der Ruhr (DE); Reichert, Arnd, Dr., 45481 Mülheim an der Ruhr (DE); Vosberg, Volker, Dr., 45481 Mülheim an der Ruhr (DE)

(57) **Zusammenfassung**

Die Erfindung betrifft ein Verfahren zur Sperrung eines Spaltes (37) einer Gasturbine (1), um das Einströmen eines Arbeitsgases (11) in den Spalt (37) zu verhindern. Zumindest eine der Leitschaufeln (15) eines Kranzes einer Gasturbine (1), welche Leitschaufeln (15) kopfseitig in einem Befestigungsring (33) festgelegt sind, weist ein Mittel (41) zum Zuführen eines volumenvergrößernden, flüssigen Sperrmediums (51) auf, das in den zwischen dem Befestigungsring (33) und dem Rotor (3) gebildeten Spalt (37) eingebracht wird, um besonders einfach und kostengünstig den Spalt (37) gegen den Einzug von Heißgas zu sperren und abzudichten.

## Beschreibung

Die Erfindung betrifft ein Verfahren zum Sperren eines Spaltes einer Gasturbine, um das Einströmen eines Arbeitsgases in den Spalt zu verhindern. Ferner betrifft die Erfindung eine Gasturbine zur Durchführung des Verfahrens.

Aus der WO 2001/09518 A1 ist eine Gasturbine bekannt, bei der die Leitschaufeln eines Leitschaufelkranzes in einem den Rotor umgreifenden Befestigungsring kopfseitig befestigt sind. Der Rotor umfasst stirnseitig aneinander liegende Rotorscheiben, die radial außen im Querschnitt zurückspringen und so einen Scheibenzwischenraum formen, in den der Befestigungsring hineinragt. Die Leitschaufeln und der Befestigungsring weisen ein Kanalsystem auf, welches Kühlluft dem von den Rotorscheiben und dem Befestigungsring gebildeten Spalt zuführt. Der Spalt grenzt an den Heißgaskanal der Gasturbine an, in dem sich beim Betrieb der Gasturbine ein unter hohem Druck stehendes Gas entspannt. Um den Einzug von Heißgas in den Spalt zu verhindern, wird dem Spalt bzw. dem Scheibenzwischenraum als Sperrluft Kühlluft mit einem Druck zugeführt, der höher ist als der Druck des im Heißgaskanal strömenden Arbeitsmediums.

Weiterhin umfasst das Kanalsystem einen in den Spalt mündenden Diffusor zum Zuführen der Kühlluft. Außerdem umfasst das Kanalsystem eine Rohrleitung zum Zuführen eines Steuer-Luftstroms in den Diffusor. Mittels des Steuer-Luftstroms kann die Menge an Sperrluft, welche in den Spalt einströmen und dadurch das Eindringen von Heißgas verhindern soll, bedarfsgerecht im Diffusor eingestellt werden. Diese Einstellung der Sperrluft ist jedoch recht aufwändig.

Zudem ist aus der EP 1 283 338 A1 eine Gasturbine bekannt, bei der durch die Leitschaufeln der Gasturbine geführtes Wasser einem von zwei benachbarten Rotorscheiben eingeschlossenen Hohlraum zugeführt wird, um eine Kühlluftkühlung der im Rotor strömenden Kühlluft für Laufschaufeln zu erzielen.

Außerdem ist aus der EP 1 180 578 A1 eine Turbinenleitschaufel bekannt, die ein im hohlen Schaufelblatt sich radial erstreckendes Rohr aufweist. Zum Kühlen des Schaufelblatts und zum Versorgen eines zwischen dem Rotor der Gasturbine und der Leitschaufel gebildeten Spaltes mit Sperrluft kann dem Spalt durch das Rohr unverbrauchte Kühlluft zugeführt werden.

Hierbei muss jedoch verhältnismäßig viel Kühlluft zum Sperren des Spaltes eingesetzt werden, um den Einzug von Heißgas in den Spalt zu verhindern.

Aufgabe der vorliegenden Erfindung ist daher die Bereitstellung eines einfachen Verfahrens, um das Einströmen eines Arbeitsgases in einen Spalt einer Strömungsmaschine, insbesondere einer Gasturbine sicher und kostengünstig zu verhindern. Weitere Aufgabe der Erfindung ist die Angabe einer im Wirkungsgrad verbesserten Strömungsmaschine, insbesondere Gasturbine.

Die auf das Verfahren gerichtete Aufgabe wird durch die Merkmale des Anspruchs 1 und die auf die Strömungsmaschine gerichtete Aufgabe wird durch die Merkmale des Anspruchs 6 gelöst.

Die Erfindung geht von der Erkenntnis aus, dass ein Sperrmedium aufgrund der in der Gasturbine auftretenden Temperaturverhältnisse nach dem Einströmen in den Spalt äußerst stark expandiert. Dadurch ist es möglich, mit einem geringen Zuführvolumen ein vergleichsweise großes Volumen an Sperrmedium im Spalt bereitzustellen, was einfach und kostengünstig das Eindringen von heißem Arbeitsmedium in den Spalt verhindert. Demnach wendet sich die Erfindung von dem Konzept ab, bei dem verdichtete Kühlluft als Sperrluft zum Abdichten des Spaltes zwischen rotierenden und stationären Komponenten der Gasturbine eingesetzt wird. Die eingesparte Sperrluft kann nen Hohlraum zugeführt wird, um eine Kühlluftkühlung der im Rotor strömenden Kühlluft für Laufschaufeln zu erzielen.

Außerdem ist aus der EP 1 180 578 A1 eine Turbinenleitschaufel bekannt, die ein im hohlen Schaufelblatt sich radial erstreckendes Rohr aufweist. Zum Kühlen des Schaufelblatts und zum Versorgen eines zwischen dem Rotor der Gasturbine und der Leitschaufel gebildeten Spaltes mit Sperrluft kann dem Spalt durch das Rohr unverbrauchte Kühlluft zugeführt werden.

Hierbei muss jedoch verhältnismäßig viel Kühlluft zum Sperren des Spaltes eingesetzt werden, um den Einzug von Heißgas in den Spalt zu verhindern.

Aufgabe der vorliegenden Erfindung ist daher die Bereitstellung eines einfachen Verfahrens, um das Einströmen eines Arbeitsgases in einen Spalt einer Strömungsmaschine, insbesondere einer Gasturbine sicher und kostengünstig zu verhindern. Weitere Aufgabe der Erfindung ist die Angabe einer im Wirkungsgrad verbesserten Strömungsmaschine, insbesondere Gasturbine.

Die auf das Verfahren gerichtete Aufgabe wird durch die Merkmale des Anspruchs 1 und die auf die Strömungsmaschine gerichtete Aufgabe wird durch die Merkmale des Anspruchs 6 gelöst.

Die Erfindung geht von der Erkenntnis aus, dass ein Sperrmedium aufgrund der in der Gasturbine auftretenden Temperaturverhältnisse nach dem Einströmen in den Spalt äußerst stark expandiert. Das Sperrmedium wird im flüssigen Zustand dem Spalt zugeführt und expandiert unter dem Einfluss der vorherrschenden Temperatur ggf. unter Änderung des Aggregatzustandes. Dadurch ist es möglich, mit einem geringen Zuführvolumen ein vergleichsweise großes Volumen an Sperrmedium im Spalt bereitzustellen, was einfach und kostengünstig das Eindringen von heißem Arbeitsmedium in den Spalt verhindert. Demnach wendet sich die Erfindung von dem Konzept ab, bei dem verdichtete Kühlluft als Sperrluft zum Abdichten des Spaltes zwischen rotierenden und stationären Komponenten der Gasturbine eingesetzt wird. Die eingesparte Sperrluft kann anstelle dessen zur Verbrennung von Brennstoff wirkungsgradsteigernd in der Gasturbine genutzt werden.

Vorteilhafte Ausgestaltungen sind in den Unteransprüchen angegeben.

Das Verfahren ist insbesondere bei Spalten einsetzbar, die zwischen dem Rotor und einem mit dem Gehäuse der Strömungsmaschine drehfest verbundenen Maschinenteil, beispielsweise einem im Querschnitt u-förmigen Befestigungsring, gebildet sind. Die in einem Kranz angeordneten Leitschaufeln liegen fußseitig an einem Träger bzw. Gehäuse fest. Die gegenüberliegenden, kopfseitigen Enden der Leitschaufeln sind, um deren Schwingungsverhalten zu verbessern, in einem den Rotor der Strömungsmaschine (z.B. Gasturbine), koaxial umgreifenden Befestigungsring fixiert. Dabei umgreift der Befestigungsring unter Bildung eines meist zylindrischen Spaltes den Rotor. Damit dem Spalt besonders einfach ein volumenvergrößerndes Sperrmedium zugeführt werden kann, weist zumindest eine Leitschaufel und der Befestigungsring Mittel zum Zuführen des Sperrmediums auf, die in den Spalt münden. Somit ist besonders einfach die Zuführung einer ausreichenden Menge an Sperrmedium realisierbar.

Vorzugsweise wird als Sperrmedium eine Flüssigkeit, insbesondere Wasser oder Deionat, eingesetzt. Da beim Betrieb in dem Bereich der Turbineneinheit vergleichsweise hohe Temperaturen auftreten, erfolgt der Übergang des flüssigen Sperrmediums in den gasförmigen Zustand vorzugsweise, nachdem das Sperrmedium in den Spalt eingeströmt ist. Durch den Aggregatszustandswechsel expandiert die Flüssigkeit zu einem Gas oder Dampf unter sehr starker Vergrößerung des Volumens. Dieser Effekt ermöglicht das sichere Sperren des Spaltes, obwohl lediglich ein geringes Zuführvolumen an flüssigem Sperrmedium in den Spalt eingebracht wird.

Der Aggregatszustandswechsel kann dabei besonders einfach und effizient ablaufen, wenn die Flüssigkeit eingedüst wird, sodass die dadurch erzeugten kleinen Wassertropfen vollständig verdampfen. Wasseransammlungen werden vermieden.

Somit ist das Verfahren besonders vorteilhaft einsetzbar, weil das zugeführte Sperrmedium flüssig ist und im Bereich des Spaltes eine Temperatur vorherrscht, die größer ist als die Siedetemperatur des flüssigen Sperrmediums.

Die Erfindung wird anhand einer Zeichnung erläutert.

### Es zeigen:

- FIG 1: eine Gasturbine in einem Längsteilschnitt,
- FIG 2: den Ausschnitt X aus FIG 1 aus der Turbineneinheit.

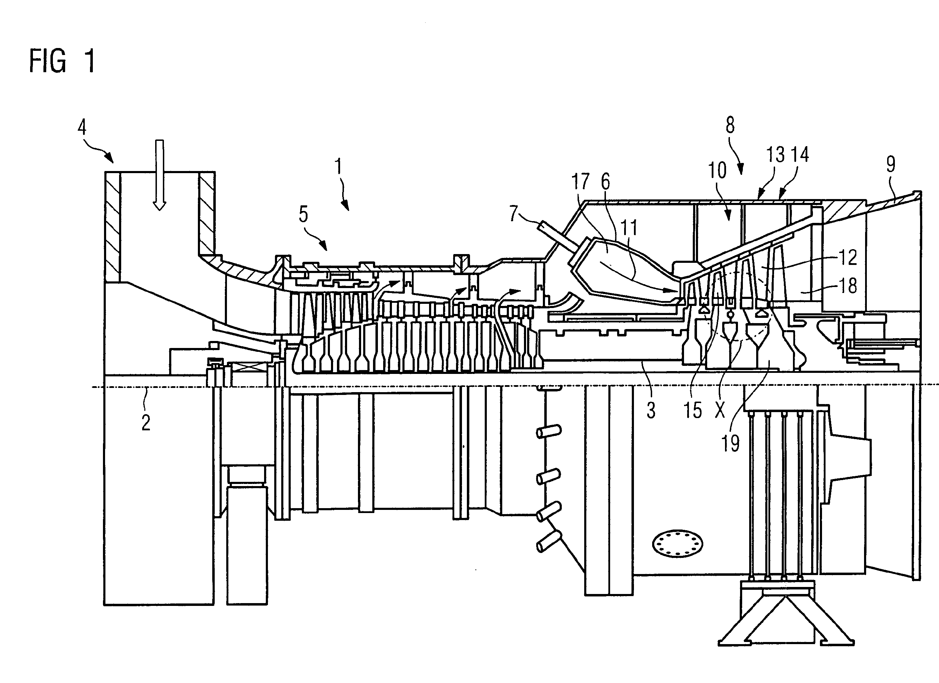

FIG 1 zeigt eine Gasturbine 1 in einem Längsteilschnitt. Sie weist im Inneren einen um eine Rotationsachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbineneinheit 8 und ein Abgasgehäuse 9. Die Ringbrennkammer 6 bildet dabei einen Verbrennungsraum 17, der mit einem ringförmigen Heißgaskanal 18 kommuniziert. Dort bilden vier hintereinander geschaltete Turbinenstufen 10 die Turbineneinheit 8. Jede Turbinenstufe 10 ist aus zwei Schaufelringen gebildet. In Strömungsrichtung eines in der Ringbrennkammer 6 erzeugten Heißgases 11 gesehen, folgt im Heißgaskanal 18 einer Leitschaufelreihe 13 eine aus Laufschaufeln 15 gebildete Reihe 14. Die Leitschaufeln 12 sind dabei am Stator befestigt, wohingegen die Laufschaufeln 15 einer Reihe 14 mittels einer Turbinenscheibe am Rotor 3 angebracht sind. An dem Rotor 3 ist ein Generator oder eine Arbeitsmaschine (nicht dargestellt) angekoppelt.

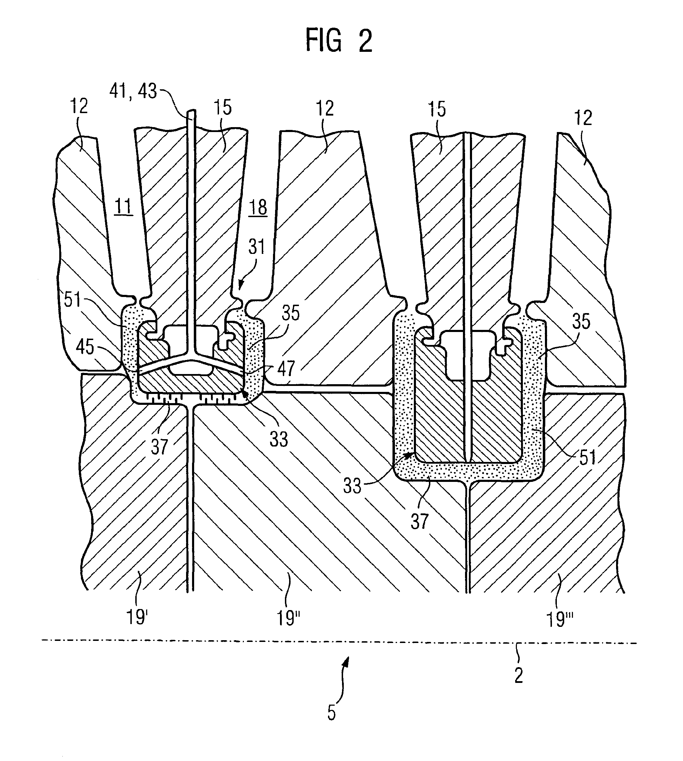

FIG 2 zeigt den Ausschnitt X aus der Turbineneinheit 8 einer Gasturbine 1 mit dem Rotor 3, welcher mehrere Rotorscheiben 19 umfasst, die stirnseitig aneinander liegend über einen nicht gezeigten, zentralen Zuganker miteinander verspannt sind. An den Rotorscheiben 19 sind radial außen Laufschaufeln 12 befestigt, deren im Querschnitt tropfenförmige, gekrümmte Schaufelblätter in den Heißgaskanal 18 der Gasturbine 1 hineinragen. In Axialrichtung gesehen zwischen den Laufschaufeln 12, sind in Kränzen um den Rotor 3 angeordnet Leitschaufeln 15 vorgesehen. Radial außen, das heißt für Leitschaufeln 15 fußseitig, sind diese an einem drehfesten, nicht dargestellten Leitschaufelträger der Gasturbine 1 befestigt. Jedes dem fußseitigen Ende gegenüberliegende kopfseitige Ende 31 der Leitschaufeln 15 ist in einem den Rotor 3 koaxial umgreifenden Befestigungsring 33 befestigt, der die kranzförmig angeordneten Leitschaufeln 15 miteinander verbindet.

Der Befestigungsring 33 ist im Querschnitt im Wesentlichen U-förmig und mit den jeweiligen fußseitigen Enden 31 der Leitschaufeln 15 verhakt. Der Befestigungsring 33 und die fußseitigen Enden 31 der Leitschaufeln 15 ragen in einen Scheibenzwischenraum 35 hinein. Die im Scheibenzwischenraum 35 den Rotorscheiben 19 zugewandten Oberflächen des Befestigungsrings 33 formen mit den Rotorscheiben 19 einen Spalt 37, der gegen das Eindringen von im Heißgaskanal 18 strömendem Arbeitsmedium geschützt werden muss, um Materialschäden an den Rotorscheiben 19 und/oder an dem Befestigungsring 33 zu verhindern.

Erfindungsgemäß weist dazu mindestens eine, vorzugsweise jede oder jede zweite Leitschaufel 15 des Leitschaufelkranzes ein Mittel 41 zum Zuführen eines flüssigen Sperrmediums 51 auf. Das Mittel 41 ist z. B. als Rohr 43 ausgebildet, welches sich durch die Leitschaufel 15 erstreckt und im Bereich des Befestigungsringes 33 in einer ersten Ausgestaltung der Erfindung in zwei Rohrabschnitte 45, 47 aufgabelt, die beide in den seitlichen Scheibenzwischenraum 35 - in zwei radiale Abschnitte des Spaltes 37 - münden. In einer zweiten Ausgestaltung verläuft das Rohr 43 im Wesentlichen radial und endet im axialen Abschnitt des Spaltes 37.Im Grundsatz könnte die Zuführung des Sperrmediums auch über entsprechende Bohrungen in den Leitschaufeln 15 und den Befestigungsring 33 erfolgen.

Beim Betrieb der Gasturbine 1 kann von radial außen durch das Rohr 43 das flüssige Sperrmedium, vorzugsweise Wasser, in bedarfsgerechter Weise über die Rohrabschnitte 45, 47 zugeführt werden. Aufgrund der in der Turbineneinheit 8 vergleichsweise hohen Temperaturen sind auch die Umgebung und der Spalt 37 aufgeheizt. Infolgedessen verdampft das flüssige Sperrmedium 51 spätestens nach dem Austreten aus den Rohrabschnitten 45, 47 im Scheibenzwischenraum 35 zu einem Gas oder Dampf, wobei das Sperrmedium 51 stark an Volumen zunimmt und dadurch den Spalt 37 abdichtet. Zudem steht das Sperrmedium 51 unter einem höheren Druck als das im Heißgaskanal 18 strömende heiße Arbeitsmedium 11.

Das gasförmige Sperrmedium 51 strömt anschließend aus dem Scheibenzwischenraum 35 heraus und in den Heißgaskanal 18 hinein. Es verhindert somit das Eindringen des heißen Arbeitsmediums 11 in den Scheibenzwischenraum 35, bzw. in den Spalt 37.

Durch die Verwendung eines flüssigen Sperrmediums, welches nach dem Austritt in einen heißen Zwischenraum volumenvergrößernd expandiert, kann in bedeutendem Umfang die sonst an dieser Stelle eingesetzte, verdichtete Kühlluft eingespart werden. Dabei ist lediglich ein geringes Volumen an Sperrmedium dem Scheibenzwischenraum zuzuführen, sodass dieses Verfahren auch bei beengten Platzverhältnissen gewinnbringend einsetzbar ist.

## Patentansprüche

1. Verfahren zum Sperren eines Spaltes (37) einer Strömungsmaschine, um das Einströmen eines Arbeitsgases (11) in den Spalt (37) zu verhindern,
bei dem dem Spalt (37) ein volumenvergrößerndes, flüssiges Sperrmedium (51) zugeführt wird.

2. Verfahren nach Anspruch 1,
bei dem der Spalt (37) zwischen dem Rotor (3) und einem mit dem Gehäuse der Strömungsmaschine drehfest verbundenen Maschinenteil, insbesondere einem Befestigungsring (33) ausgebildet ist.

3. Verfahren nach Anspruch 1 oder 2,
bei dem als Sperrmedium (51) Wasser eingesetzt wird.

4. Verfahren nach Anspruch 1, 2 oder 3,
bei dem das Sperrmedium (51) eingedüst wird.

5. Verfahren nach einem der vorangehenden Ansprüche,
im Bereich des Spaltes (37) eine Temperatur vorherrscht, die größer ist als die Siedetemperatur des flüssigen Sperrmediums.

6. Strömungsmaschine, insbesondere Gasturbine (1) zum Durchführen des Verfahrens nach einem der vorangehenden Ansprüche,
mit einem Kranz aus jeweils fußseitig an einem Träger
festgelegten Leitschaufeln (15), deren gegenüberliegende, kopfseitige Enden in einem Befestigungsring (33) befestigt sind und
mit einem Rotor (3), der vom Befestigungsring (33) unter Bildung eines Spaltes (37) koaxial umgriffen ist,
**dadurch gekennzeichnet, dass** zumindest eine der Leitschaufeln (15) und der Befestigungsring (33) Mittel zum Zuführen eines volumenvergrößernden flüssigen Sperrmediums (51) aufweisen, die in den Spalt (37) münden.

7. Strömungsmaschine nach Anspruch 6,
bei der das Mittel (41) ein im Inneren der Leitschaufel (15) angeordnetes Rohr oder Bohrung umfasst.

8. Strömungsmaschine nach Anspruch 7,
bei der das Rohr durch den Befestigungsring (33) ragend in den Spalt (37) mündet.
